# EUROPEAN PATENT APPLICATION

(11) **EP 2 060 177 A2**
(43) Date of publication of application: **20.05.2009**
(21) Application number: 08168543.0
(22) Date of filing: 07.11.2008
(51) Int. Cl.: A01M 1/04

(54) **Improved insect attraction light source**

(30) Priority: 19.11.2007 US 942245
(71) Applicant: General Electric Company, Schenectady, NY 12345 (US)
(72) Inventor: Wilson, Carolyn E., University Heights, OH 44118 (US); Gyulasi, Ottokar, H-1086, Budapest (HU); Revesz, Gabriella, H-2120, Dunakeszi (HU)
(74) Representative: Bedford, Grant Richard

(57) **Abstract**

A lamp (10) having improved insect attraction is provided. The lamp (10) has a light-transmissive envelope (12) being substantially free of cerium. The lamp (10) also has a phosphor layer (16) comprising at least one phosphor having an emission band in the UVA light region for attracting insects. The at least one phosphor of the phosphor layer (16) desirably has an emission spectrum in the UVA region that sufficiently matches an insect's eye sensitivity curve. For instance, the at least one phosphor can have an emission band in the UVA wavelength range of 320 to 400 nm, wherein said emission band has a maximum between 325 to 365 nm.

## Description

The present invention relates generally to a lamp, and more particularly to a fluorescent lamp having improved insect attraction.

Insect attraction lamps emit energy in the form of light at select wavelengths. Generally, insects can only see ultraviolet and short wavelength visible light because insects have a photopic response curve that is sensitive to light having wavelengths in the ranges of 300-400 nm (ultraviolet) and 600-650 nm (orange). Ultraviolet radiation is composed of three ranges, UVA, which is from 320 to 400 nm, UVB, which is from 280 to 320 nm, and UVC, which is from 100 to 280 nm. Man-made light sources generally produce some amount of ultraviolet radiation. In particular, fluorescent lighting generates minimal light in the UVA range.

Fluorescent lighting emitting light in the UVA region near a wavelength of 350 nm often contains lead-doped phosphors to generate light. Use of lead-doped phosphors creates environmental concerns and thus it is desirable to eliminate such phosphors. A common solution has been to employ non-lead-doped phosphors having a peak wavelength at about 368 nm. However, lamps emitting UVA light at about 368 nm are not as effective at attracting insects as lamps emitting light at about 350 nm. That is, UVA light having a wavelength near 350 nm more closely matches an insect's eye sensitivity curve. Accordingly, there is a need in the industry for a lamp that utilizes lead-free phosphors and provides effective insect attraction by more closely matching an insect's eye sensitivity curve.

A lamp's ability to maintain a sufficient level of UVA light output over time can significantly increase the useful life of a lamp and affect its insect attraction efficiency. UVA phosphors emitting light close to an insect's eye sensitivity can degrade over time and reduce the overall UVA light output of a lamp over its useful life. Thus, there is a need in the industry for a lamp having improved UVA light maintenance and intensity in order to increase the useful life of the lamp and provide sufficient insect attraction characteristics.

According to an aspect of the present invention there is provided a lamp having improved insect attraction comprising a light-transmissive glass envelope having an inner surface; a discharge-sustaining fill gas sealed inside the envelope; and a phosphor layer comprising at least one phosphor having an emission band in the UVA wavelength range of 320 to 400 nm, wherein said emission band has a maximum between 325 to 365 nm. The light-transmissive glass envelope preferably contains less than 1 weight percent of cerium or a cerium compound.

According to an aspect of the present invention there is provide a lamp having improved insect attraction comprising a light-transmissive glass envelope having an inner surface; a discharge-sustaining fill gas sealed inside the envelope; and a phosphor layer comprising at least one phosphor having an emission band in the UVA wavelength range of 320 to 400 nm, wherein said emission band has a maximum between 325 to 370 nm. The light-transmissive glass envelope preferably has a UV transmission greater than 40 percent in the wavelength range of 320 to 370 nm.

According to an aspect of the present invention there is provided a lamp having improved insect attraction comprising a light-transmissive glass envelope having an inner surface; a discharge-sustaining fill gas sealed inside the envelope; and a phosphor layer comprising at least one phosphor having an emission band in the UVA wavelength range of 320 to 400 nm, wherein said emission band has a maximum between 325 to 365 nm. The light-transmissive glass envelope preferably being colored glass.

Various aspects and embodiments of the present invention will now be described in connection with the accompanying drawings, in which:
Fig. 1shows diagrammatically, and partially in section, a lamp according to an embodiment of the present invention.
Fig. 2 shows a compact fluorescent lamp according to an embodiment of the present invention.
Fig. 3 shows an emission spectrum of an yttrium phosphate cerium doped phosphor in accordance with one embodiment of the present invention.
Fig. 4 shows an emission spectrum of a lamp having a phosphor layer including an yttrium phosphate cerium doped phosphor in accordance with one embodiment of the present invention.
Fig. 5 shows an insect eye sensitivity curve.
Fig. 6 shows the UV transmission curve for cerium-free and soda-lime glass in accordance with Table 1 of Example 1.

In the description that follows, when a preferred range, such as 5 to 25 (or 5-25), is given, this means preferably at least 5 and, separately and independently, preferably not more than 25.

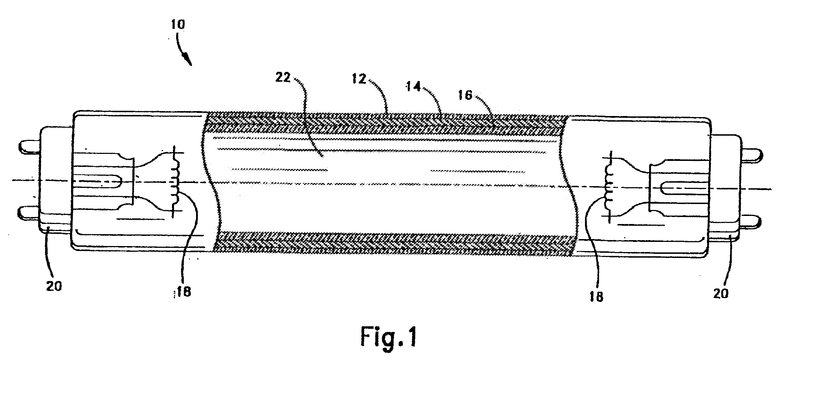

With reference to Fig. 1, there is shown a low pressure mercury vapor discharge lamp 10 according to the invention, which is generally well known in the art. The lamp 10 has a light-transmissive, preferably linear and cylindrical, glass tube or envelope 12 that preferably has a circular cross section.

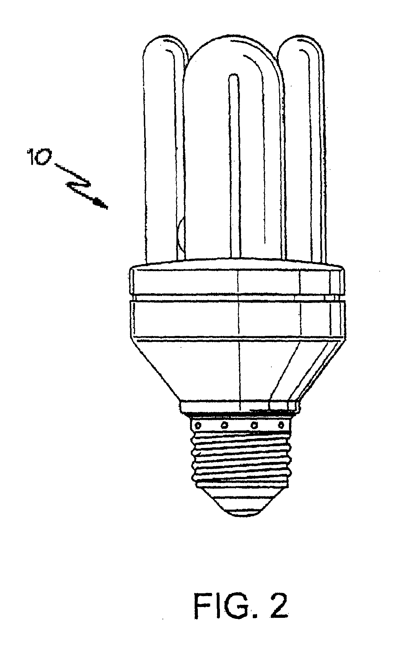

Lamp 10 can be a fluorescent lamp, such as a T12, T10 or T8 lamp, which is generally known in the art, nominally 48 inches or 4 feet in length, a cylindrical tube, and having a nominal outer diameter of at least 1 inch or an outer diameter of 1 inch or about 1 inch. The lamp 10 can also be nominally 1.5, 2, 3, 5, 6 or 8 feet long. Alternatively, the lamp 10 can be nonlinear, for example circular or otherwise curvilinear in shape, or have a nominal outer diameter less than one inch such as a T5, T4 or T3 lamp having nominal outer diameters of about 0.625 (⅝) inch, 0.5 (½) inch and 0.375 (⅜) inch, respectively. In this alternative case, as shown in Figure 2, the lamp 10 can also be nominally 1.5, 2, 3, 4, 5, 6 or 8 feet long, or it may be a compact fluorescent lamp (CFL) having a spiral, multi-finger, folded or wrapped topology so that the overall length of the lamp is much shorter than the unfolded length of the glass tube.

As shown in Figure 1, the lamp 10 is hermetically sealed by bases 20 attached at both ends and electrodes or electrode structures 18 (to provide an arc discharge) are respectively mounted on the bases 20. A discharge-sustaining fill 22 is provided inside the sealed glass envelope, the fill comprising or being an inert gas or inert gas mixture at a low pressure in combination with a small quantity of mercury to provide the low vapor pressure manner of lamp operation.

The inert gas in the fill comprises at least one rare gas such as, but not limited to, argon, krypton, xenon and neon or combinations thereof. The total pressure of the fill 22 (including mercury vapor and inert gas) is preferably 0.4-5, preferably 1-3, preferably 1.6-2.8, torr at the conventional fill temperature as known in the art, for example 25° C.

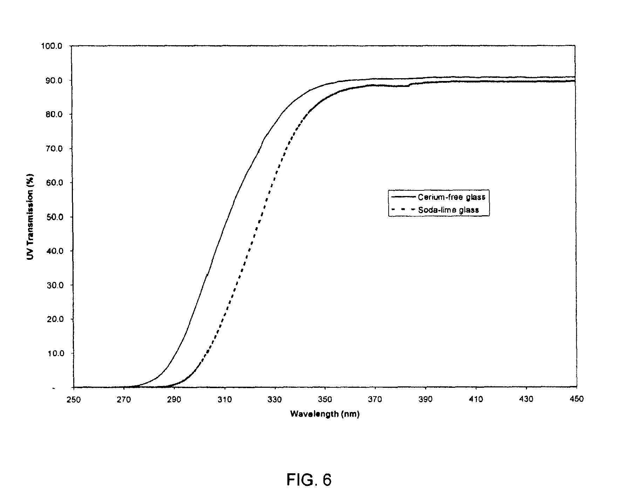

The light-transmissive envelope 12 can be a clear and colorless glass. Preferably, the light-transmissive envelope 12 is substantially free of a material including cerium (Ce) or cerium compounds, such as cerium oxide (CeO₂) or combinations thereof and the like. For example, the glass envelope might comprise less than 1, preferably 0.5, or about 0.4, 0.3, 0.2, 0.15 or 0.1 weight percent cerium or cerium compounds, based on total weight of the envelope 12. An example of transparent glass that can be used as the light-transmissive envelope 12 is a cerium-free Type 360 glass supplied by EMGO Industriezone Balendijik 1050, 3920 Lommel, Belgium. Figure 6 illustrates a UV transmission curve for a cerium-free Type 360 glass envelope supplied by EMGO.

Alternatively, the light-transmissive envelope 12 can be colored or tinted glass instead of a clear and colorless glass. The colored or tinted glass can be, for example, cobalt blue glass or a deep-bluish-purple glass such as Wood's glass. The colored glass preferably blocks or filters substantially all visible light having wavelengths above 400 nanometers ("nm"). The colored glass can be doped with nickel oxides, such as NiO, Ni₂O₃ and NiO₂ and/or cobalt oxides, such as CoO, Co₂O₃ and Co₃O₄. An example of colored glass that can be used as the light-transmissive envelope 12 is Mengshi UV 3650A BLB glass supplied by Kun Shan Mengshi Glass Ltd. The product 3650A BLB glass is a cobalt oxide- and nickel oxide-doped glass having a deep blue color. The product 3650A BLB glass includes the following components in minimum compositional weight percents: 65 wt. % SiO₂, 0.5 wt. % Al₂O₃, 8 wt. % Na₂O, 2 wt. % K₂O, 0.5 wt. % B₂O₃, 6 wt. % PbO, 1 wt. % BaO, 1 wt. % CaO and 1.5 wt. % CoO and NiO.

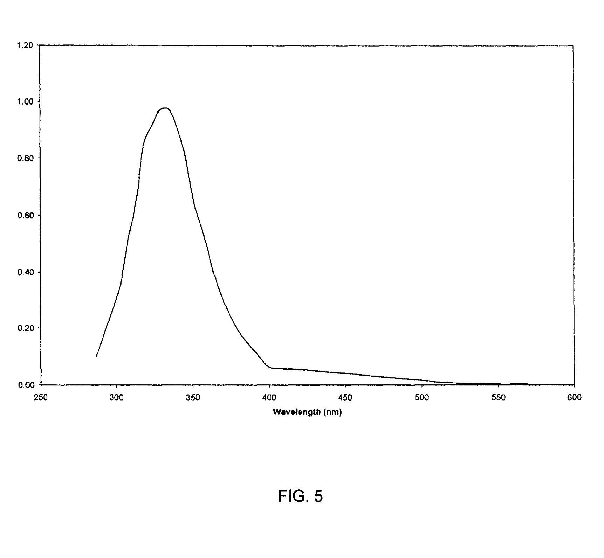

The light-transmissive envelope 12 substantially free of cerium as described above provides improved transmission of UVA light. It is desirable that the envelope 12 have improved UV transmission of UVA light having a wavelength in the range of 320-400, preferably 320-375, preferably 320-365, preferably 320-360, more preferably 320-355 or about 320 to 354 nm. Improved UVA transmission at the above wavelengths provides intense light within the eye sensitivity curve of an insect as shown in Figure 5 discussed below. Improved UV transmission within the eye sensitivity curve on an insect allows a lamp 10 to have improved insect attraction.

Generally, insects can see ultraviolet light having a wavelength in the range of 300-380 nm, with a peak sensitivity in the range of 320 to 360 nm. An envelope 12 having improved UVA transmission at wavelengths in the range of 320 to 360 nm can increase the intensity of the UVA light-emitting phosphor or blend of phosphors of the phosphor layer 16 described below. Increased UVA intensity over the life of a lamp 10 extends the useful life of a lamp 10. Such a lamp 10 can improve insect attraction initially and over its useful life.

The inner surface of the envelope 12 is preferably provided with a barrier coating or layer 14 for improved light softness and/or brightness maintenance with age. The inner surface of the barrier layer 14 is preferably provided with a phosphor layer 16, the barrier layer 14 being between the envelope 12 and the phosphor layer 16. Phosphor layer 16 is preferably a rare earth phosphor layer, such as a rare earth triphosphor or multi-phosphor layer, or other phosphor layer.

The general coating structure is preferably as taught in U.S. Pat. No. 5,602,444. This coating structure is known in the art. As disclosed in the '444 patent, the barrier layer 14 can comprise a blend of alumina particles. For example, the barrier layer 14 can comprise entirely gamma alumina particles or a blend of gamma- and alpha- alumina particles that are preferably 5-80 or 10-65 or 20-40 weight percent gamma alumina and 20-95 or 35-90 or 60-80 weight percent alpha alumina. In another example, the barrier layer 14 might include Degussa-C colloidal alumina particles which can result in better lumen irradiance of the lamp 10.

The phosphor layer 16 is coated on the inner surface of the barrier layer 14 and preferably has a coating weight of 1-5, preferably 2-5, preferably 2.5-5, more preferably 3-4.5 or about 3, 3.1, 3.2, 3.3, 3.4, 3.5, 3.6, 3.7, 3.8, 3.9, 4, 4.1, 4.2, 4.3, 4.4 or 4.5 mg/cm².

The phosphor layer 16 comprises at least one rare earth phosphor layer, but it may also be any other phosphor layer as known in the art. Preferably, the phosphor layer 16 is substantially free of lead or lead-doped phosphors. The phosphor layer 16 preferably emits light in UVA region in the range of 320 to 400 nm. The phosphor layer 16 preferably comprises at least one phosphor having an emission band with a maximum between 320-400, preferably 325-375, preferably 325-370, preferably 325-365, preferably 340-360, more preferably 345-355 or about 350 or 354 nm. A single phosphor can be used in the phosphor layer 16. Preferably, the phosphor or phosphor blend of the phosphor layer 16 emits substantially no light in the UVB and UVC regions, such as in the wavelength range of 100 to 300 and more preferably 100 to 320 nm. The phosphor layer 16 can further comprise alumina particles, such as Degussa-C colloidal alumina particles. For example, the phosphor layer 16 might include 0.1 to 10, preferably 1 to 8, preferably 2-6 or about 3, 3.5, 4, 4.5 or 5 weight percent alumina particles. It is thought that alumina particles can promote improved adhesion characteristics and support higher light output or intensity to the phosphor layer 16.

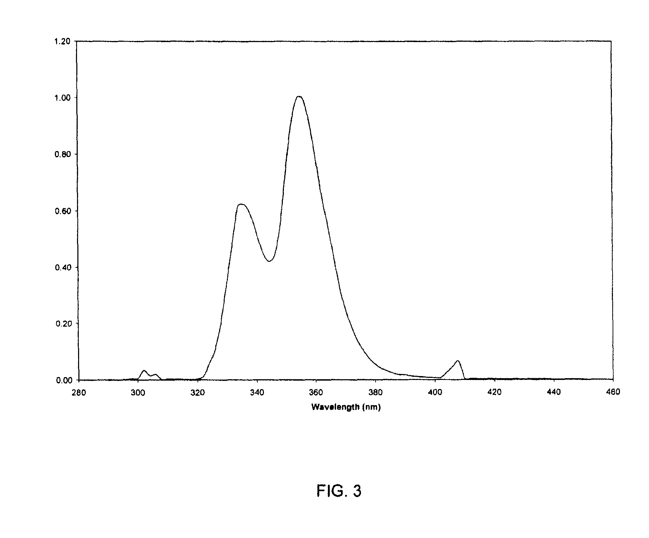

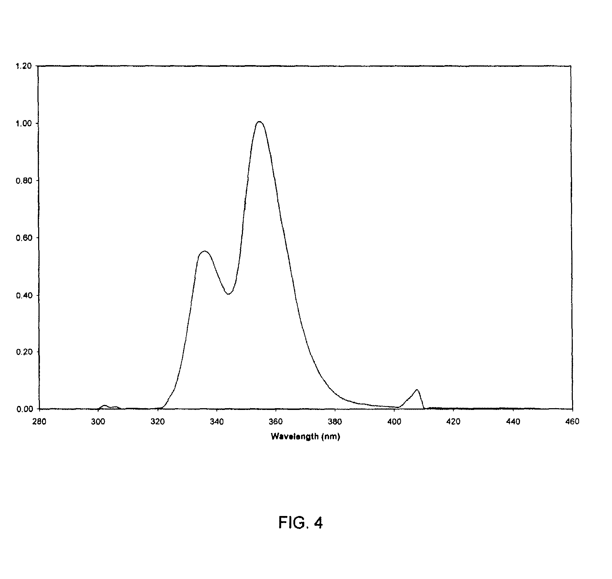

The phosphor layer 16 can include, for example, a yttrium phosphate cerium doped phosphor such as YPO₄:Ce having product code NP-805 supplied by Nichia Corporation, 491 Oka, Kaminada-cho, Anan-shi, Tokushima 774-8601 Japan. An emission spectrum for the YPO4:Ce phosphor is shown in Figure 3. An emission spectrum for a lamp 10 having a phosphor layer including the YPO₄:Ce phosphor is shown in Figure 4. As shown in Figures 3 and 4, the YPO₄:Ce phosphor has dual emission peaks and a wide emission band in the UVA wavelength range of 320 to 400 nm. The YPO₄:Ce phosphor has an emission spectrum in the UVA region with maximum peak at about 354 nm. The phosphor also has a strong peak at about 335 nm. The peak at about 354 nm is more intense than the peak at about 335 nm.

The wide emission band of the yttrium phosphate in the UVA region closely matches the eye sensitivity curve of a common insect, which has a peak sensitivity in the wavelength range of 325 to 340 nm. A representative eye sensitivity curve for an insect is shown in Figure 5. As shown in Figure 5, the eye of an insect is sensitive to light having a wavelength range of about 300 to 380 nm. The eye sensitivity of an insect is more intense at a wavelength range of about 320 to 360 nm, and more intense at 325 to 340 nm. The dual-peak emission spectrum of the YPO₄:Ce phosphor, as shown in Figure 4, provides intense insect attracting UVA light in the eye sensitivity range of an insect, and preferably in the more intense sensitivity range of about 325 nm to 360 nm. For example, the dual emission peaks at 335 and 354 nm of the YPO₄:Ce phosphor are within the intense eye sensitivity region of the insect eye sensitivity curve of Figure 5. The 335 nm emission peak of the YPO₄:Ce phosphor is within the peak sensitivity range of the eye of an insect at a wavelength range of 325 to 340 nm. Thus, a lamp 10 having a phosphor layer 16 comprising a yttrium phosphate cerium doped phosphor can have improved insect attraction characteristics.

Other phosphors of the phosphor layer 16 can include europium-doped strontium fluoroborate (SrB₄O₇F:Eu²⁺), europium-doped strontium borate (SrB₄O₇:Eu²⁺) or combinations thereof and the like. Multiple phosphor layers may also be provided.

In order to promote a further understanding of the invention, the following examples are provided. These examples are shown by way of illustration and not limitation.

### EXAMPLE 1

The UVA light transmission of various light-transmissive glass envelopes was measured and compared as is conventional in the art. Table I below shows the UV transmission percentage for substantially cerium-free glass and conventional soda-lime glass for a range of UVA light wavelengths. The UV transmission data represents the UV transmission of the glass envelopes per 1 mm of glass thickness. The UV transmission percentage for the broader UV light wavelength range of about 250 to 450 nm is shown in Figure 6. The cerium-free glass envelope was composed of cerium-free Type 360 glass supplied by EMGO Industriezone Balendijik 1050, 3920 Lommel, Belgium. The cerium-free glass used contains less than 0.2 weight percent CeO₂. The soda-lime glass used is conventional and known in the art.

**Table 1**

| UVA Transmission for Glass Envelopes (per 1 mm glass thickness) | | |
|---|---|---|
| Glass Envelope Material | Cerium-Free Glass | Conventional Soda-Lime Glass |
| Lamp Type | Linear Fluorescent T4 | Linear Fluorescent T8 |
| Wavelength (nm) | Percent (%) UV Transmission | |
| 320 | 64 | 40 |
| 328 | 75 | 57 |
| 334 | 81 | 68 |
| 340 | 85 | 76 |
| 344 | 87 | 80 |
| 350 | 89 | 84 |
| 354 | 89 | 86 |
| 360 | 90 | 87 |
| 364 | 90 | 88 |
| 370 | 91 | 89 |

As can be seen, the cerium-free glass envelope has increased UVA transmission in the eye sensitivity curve for an insect as compared to a convention soda-lime glass envelope. For example, the cerium-free glass had 24, 18, 13, 9, 7, 5, 3, 3, 2 and 2 percent greater light transmission through the glass envelope than the conventional soda-lime glass envelope at wavelengths of 322, 328, 334, 340, 344, 350, 354, 360, 364 and 370 nm, respectively. As shown, the cerium-free glass envelope has improved UVA transmission in an insect's eye sensitivity range. For example, the cerium-free glass of this example provides improved UVA transmission in the peak region of the eye sensitivity curve at a wavelength range of 320 to 360 nm, and more preferably at a range of 325 to 340 nm, as shown in Figure 6. A shown in Table 1 and Figure 6, the cerium-free glass preferably has a UV transmission greater than 40, preferably 45, preferably 50, preferably 52, preferably 55, or preferably about 56, 57, 58, 59, 60, 61, 62, 63 or about 63.5 percent in the wavelength range of 320 nm to 370 nm.

While the invention has been described with reference to preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the preferred mode contemplated for carrying out this invention, but that the invention will include all embodiments falling within the scope of the appended claims.

## Claims

1. A lamp (10) having improved insect attraction, the lamp comprising:
a light-transmissive glass envelope (12) having an inner surface, wherein said envelope (12) being less than 1 weight percent of a material selected from the group consisting of cerium and a cerium compound;
a discharge-sustaining fill gas (22) sealed inside said envelope (12);
a phosphor layer (16) comprising at least one phosphor having an emission band in the UVA wavelength range of 320 to 400 nm, wherein said emission band has a maximum between 325 to 365 nm.

2. The lamp (10) of claim 1, said glass envelope (12) comprising less than 0.5 weight percent cerium.

3. The lamp (10) of claim 1 or claim 2, said glass envelope (12) comprising less than 0.5 weight percent of a cerium compound.

4. The lamp (10) of any preceding claim, said cerium compound being cerium oxide.

5. The lamp (10) of any preceding claim, said at least one phosphor having an emission band with a first peak and a second peak in the region between 320 to 400 nm.

6. The lamp (10) of any preceding claim, wherein said first peak is at about 354 nm and said second peak is at about 335 nm.

7. The lamp (10) of any preceding claim, said at least one phosphor being a cerium-doped yttrium phosphate.

8. The lamp (10) of any preceding claim, said at least one phosphor being YPO₄:Ce.

9. A lamp (10) having improved insect attraction, the lamp (10) comprising:
a light-transmissive glass envelope (12) having an inner surface, said envelope (12) having a UV transmission greater than 40 percent in the wavelength range of 320 nm to 370 nm;
a discharge-sustaining fill gas (22) sealed inside said envelope (12);
a phosphor layer (16) comprising at least one phosphor having an emission band in the UVA wavelength range of 320 to 400 nm, wherein said emission band has a maximum between 325 to 370 nm.

10. A lamp (10) having improved insect attraction, the lamp comprising:
a light-transmissive glass envelope (12) having an inner surface, said envelope (12) being colored glass;
a discharge-sustaining fill gas (22) sealed inside said envelope (12);
a phosphor layer (16) comprising at least one phosphor having an emission band in the UVA wavelength range of 320 to 400 nm, wherein said emission band has a maximum between 325 to 365 nm.
